# FASCICULE DE BREVET EUROPEEN

(11) **EP 0 992 017 B1**
(45) Date de publication et mention de la délivrance du brevet: **10.04.2002**
(21) Numéro de dépôt: 98933677.1
(22) Date de dépôt: 22.06.1998
(51) Int. Cl.: G06F 17/60

(54) **INSTALLATION DE SUIVI DE BOUTEILLES DE GAZ**
EINRICHTUNG ZUM FOLGEN/ÜBERWACHEN VON GASFLASCHEN
INSTALLATION FOR MONITORING GAS CYLINDERS

(30) Priorité: 26.06.1997 FR 9708032
(43) Date de publication de la demande: 12.04.2000
(73) Titulaire: L'AIR LIQUIDE, SOCIETE ANONYME POUR L'ETUDE ET L'EXPLOITATION DES PROCEDES GEORGES CLAUDE, 75321 Paris Cédex 07 (FR)
(72) Inventeur: FERENCZI, Laurent, F-75018 Paris (FR); BARTH, Frédéric, F-75015 Paris (FR)
(74) Mandataire: Le Moenner, Gabriel
(86) Numéro de dépôt international: FR9801300
(87) Numéro de publication internationale: WO9900755

(56) Documents cités:
- EP-A- 0 660 027
- EP-A- 0 696 778
- FR-A- 2 677 148
- US-A- 4 920 488
- PATENT ABSTRACTS OF JAPAN vol. 014, no. 119 (M-0945), 6 mars 1990 & JP 01 316600 A (KUBOTA LTD), 21 décembre 1989

## Description

L'invention est relative à une installation de suivi de conteneurs, en particulier de bouteilles de gaz.

L'utilisation de gaz industriels conditionnés en bouteilles est très répandue dans l'industrie. La Demanderesse a constaté que la gestion d'un parc de bouteilles pose un certain nombre de problèmes, tant pour un fournisseur que pour une entreprise consommatrice.

Une entreprise consommatrice dispose généralement d'un dépôt central auquel le fournisseur livre les bouteilles de gaz commandées. A partir de ce dépôt central, les bouteilles sont distribuées dans les différents services de l'entreprise pour être acheminées par le personnel vers leur point d'utilisation. On parle alors de bouteilles "volantes" pour les différencier des bouteilles "en rampe" qui sont livrées et raccordées par le fournisseur à leurs points d'utilisation.

En ce qui concerne les bouteilles volantes, l'entreprise est souvent confrontée aux difficultés suivantes :

### - Disponibilité de bouteilles pleines dans le dépôt central -

Souvent, le nombre de bouteilles pleines disponibles dans un dépôt central n'est pas surveillé. Un utilisateur peut alors enlever la dernière bouteille de gaz pleine d'un certain type sans en commander, par négligence ou par oubli, une nouvelle. L'utilisateur suivant ayant besoin d'une bouteille de gaz du même type se trouve donc bloqué dans son travail le temps d'effectuer une commande et d'attendre que le fournisseur livre la commande.

### - Surstock -

Au vu du problème exposé ci-dessus, il arrive que plusieurs utilisateurs passent indépendamment les uns des autres des commandes de bouteilles du même type, soit parce qu'ils n'avaient pas connaissance des commandes des autres, soit par peur de se trouver bloqués dans leur travail. Un tel comportement du personnel de l'entreprise conduit à un surstock qui encombre le dépôt et qui réduit sa capacité de stockage pour d'autres types de gaz. De plus, un tel comportement entraîne une augmentation considérable du coût de fonctionnement du parc de bouteilles, car, en supplément du gaz contenu dans ces bouteilles, l'entreprise doit acquitter par mois pour chaque bouteille une taxe de location.

### - Surnombre de bouteilles vides et localisation de celles-ci sur un site -

Souvent, les bouteilles vides utilisées ne sont pas rapportées par les utilisateurs au dépôt central où le fournisseur les reprend. Par conséquent, le nombre de bouteilles volantes en circulation au sein de l'entreprise augmente considérablement Dans ce cas aussi, l'entreprise doit débourser inutilement une somme importante pour la location de ces bouteilles vides non utilisées.

De plus, les bouteilles non-rapportées sont souvent placées à l'écart de sorte qu'il est difficile, notamment sur un site industriel de taille importante, de les retrouver pour les remettre en circulation.

### - Utilisation non autorisée -

L'accès au dépôt central de stockage de bouteilles n'est pas toujours interdit aux personnes non-autorisées, notamment des personnes étrangères à l'entreprise. Celles-ci peuvent alors se servir d'une manière frauduleuse des gaz achetés par l'entreprise. Le plus souvent, ces bouteilles fraudées ne sont même pas rapportées au dépôt central. Cette utilisation frauduleuse entraîne des surcoûts importants et perturbe la gestion d'un parc de bouteilles volantes.

On peut remédier au moins à certains de ces inconvénients en aménageant dans l'entreprise un dépôt central de bouteilles de gaz géré par un magasinier. Mais l'engagement d'un tel magasinier n'est pas toujours envisageable pour une petite ou moyenne entreprise dont le parc de bouteilles volantes n'est pas très important. Par ailleurs, dans un site important d'une grande entreprise, l'étendue du site conduit souvent à prévoir plusieurs dépôts de taille moyenne gérés de façon autonome à des endroits proches des points d'utilisation, au lieu d'un grand dépôt central avec un magasinier.

Par ailleurs, pour des entreprises disposant de plusieurs sites industriels, la Demanderesse a constaté que les bouteilles circulent après leur livraison souvent d'un site à un autre ce qui pose ensuite le problème de savoir à quel site le contenu et la location de ces bouteilles doivent être facturés.

D'autre part, au sujet du remplissage des bouteilles de gaz, la Demanderesse a observé qu'il est parfois difficile de déceler des défauts de fonctionnement dans une rampe de remplissage de bouteilles par lots.

Par ailleurs, la Demanderesse a remarqué que le remplissage d'une bouteille avec un produit, par exemple de l'acétylène, destiné à être dissous dans un solvant contenu dans la bouteille présente l'inconvénient de nécessiter un nombre important d'interventions humaines qui réduisent de manière significative la cadence d'une station de remplissage de tels produits. En effet, lors de la consommation de l'acétylène conditionné en une bouteille de gaz et dissous dans un solvant, une fraction du solvant est emportée de sorte qu'une fois que l'acétylène dans la bouteille est épuisé, la quantité restante de solvant a diminué de façon inconnue. C'est pourquoi, avant de pouvoir procéder au remplissage de l'acétylène, on doit faire l'appoint du solvant ce qui augmente de manière significative la durée d'un cycle de remplissage.
- le document EP-A-660027 (Siraja) décrit un carroussel automatisé de remplissage de bouteilles de gaz muni de postes de pesage tournant avec le carroussel, équipés chacun d'un récepteur apte, en passant devant un émetteur, à recevoir un signal d'identification de la bouteille associée identifiée par un lecteur de code barre situé le long du convoyeur d'amenée des bouteilles au carroussel, de façon à doser la quantité de fluide à introduire dans chaque bouteille.
- Le document FR-A-2677148 (Thomson CSF) décrit un système conversationnel entre une unité centrale, une base de données et une mémoire porteuse d'informations réinscriptible associée à un matériel non identifié, essentiellement pour le suivi de la maintenance de ce dernier.
- Le document EP-A-696778 décrit un exemple d'étiquette électronique de la société Gemplus Card dont il est fait état ci-après, en relation avec l'exemple de réalisation N°2.

L'invention vise à résoudre la plupart des divers problèmes liés à la gestion de conteneurs en général, et de bouteilles de gaz en particulier, en proposant une installation de suivi de conteneurs permettant une meilleure gestion d'un parc de conteneurs tant au niveau d'une entreprise consommatrice qu'au niveau d'un fournisseur.

A cet effet, l'invention a pour objet une installation de suivi de conteneurs équipés chacun d'un support d'informations, comprenant au moins une zone délimitée de stockage des conteneurs comportant au moins un passage d'accès pour un utilisateur à la zone de stockage pourvu d'au moins un dispositif d'identification de l'utilisateur et d'au moins un dispositif de lecture apte à lire les informations sur le support d'informations des conteneurs, et des moyens d'exploitation de données exploitant au moins des informations relevées par le dispositif de lecture.

L'installation selon l'invention peut de plus comporter une ou plusieurs des caractéristiques suivantes :
- les moyens d'exploitation comportent des moyens d'évaluation du stock de conteneurs entreposés dans la zone de stockage.
- les moyens d'exploitation comportent des moyens de détermination des positions des conteneurs dans la zone de stockage.
- la zone de stockage comporte au moins un poste de distribution d'un stock de conteneurs comprenant un espace de stockage des conteneurs et des moyens d'autorisation d'enlèvement d'au moins un conteneur disposé dans ledit espace de stockage, lesdits moyens d'autorisation comportant, d'une part, des moyens de blocage commutables entre une position de blocage des conteneurs disposés dans l'espace de stockage et une position de distribution dans laquelle au moins un conteneur est autorisé à être enlevé, et, d'autre part, des moyens de commande desdits moyens de biocage.
- les moyens d'exploitation des informations comprennent en outre des moyens de mémorisation d'au moins un seuil minimal de conteneurs pleins, des moyens de comparaison du stock avec le seuil minimal de conteneurs pleins, des moyens de déclenchement d'une commande de réapprovisionnement, commandés par les moyens de comparaison du stock avec le seuil minimal, et des moyens de transmission de la commande de réapprovisionnement à un centre de réapprovisionnement.

D'autres caractéristiques et avantages de l'invention ressortiront de la description suivante, donnée à titre d'exemple, sans caractère limitatif, d'applications relatives à des bouteilles de gaz en regard des dessins annexés sur lesquels :
Les figures 1, 2 et 4 sont des schémas synoptiques de sous-ensembles d'installations de suivi de bouteilles de gaz utiles à la compréhension de l'invention,
La figure 3 est un schéma synoptique d'une étiquette électronique destinée à être montée sur une bouteille de gaz,
La figure 5 est un schéma d'une installation suivant un mode de réalisation de l'invention,
La figure 6 est un schéma synoptique de la structure de l'installation de la figure 5,
La figure 7 est un schéma d'une variante de l'installation de la figure 5,
La figure 8 est un schéma synoptique de la structure de l'installation de la figure 7,
La figure 9 est un schéma synoptique d'une installation suivant un autre mode de réalisation de l'invention,
La figure 10 est un schéma synoptique d'une variante de l'installation représentée sur la figure 9.

A des fins de clarté, dans la description ci-après, les éléments identiques des différents modes de réalisation porteront les mêmes numéros de référence.

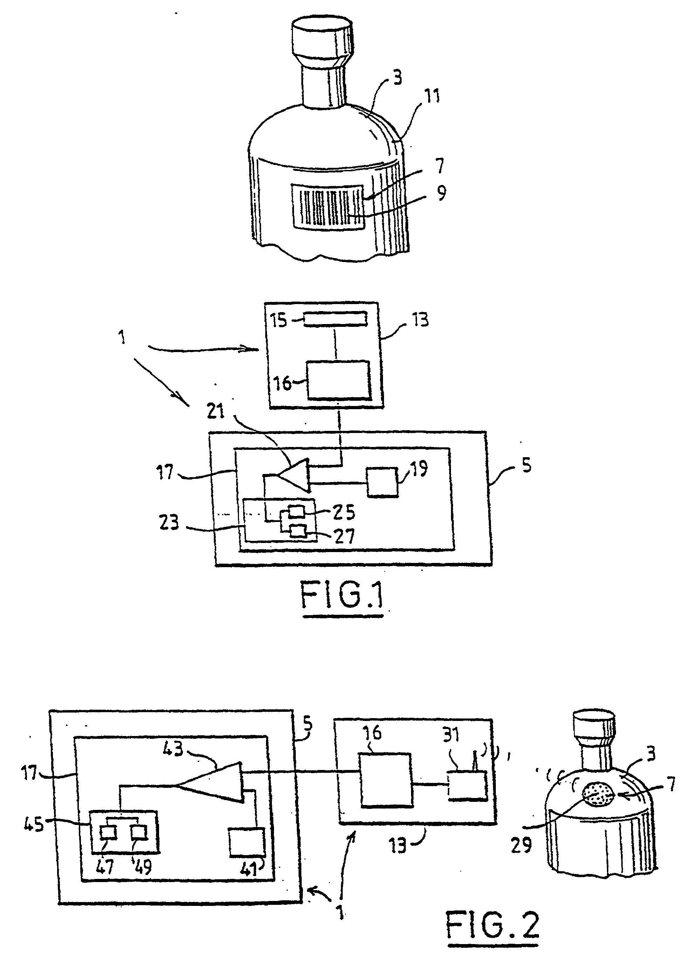

La figure 1 montré un schéma synoptique d'un sous-exempte d'une installation 1 de suivi de bouteilles de gaz 3. Le sous-ensemble comprend une unité fonctionnelle 5 pilotable adaptée pour exécuter une tache prédéterminée relative auxdites bouteilles 3, à savoir la surveillance de dates limites comme par exemple la date de péremption d'un produit contenu dans la bouteille 3 ou la date de la prochaine épreuve hydraulique de la bouteille, ainsi que le déclenchement d'une alarme dans le cas d'un dépassement d'une de ces dates.

A cet effet, la bouteille 3 comporte un support d'informations 7 réalisé sous la forme d'une étiquette 9 à code à barres appliquée sur le corps 11 de la bouteille 3.

L'étiquette 9 à code à barres comporte différentes informations sur la bouteille 3 codées- selon un procédé de codage connu en soi. Ces informations comportent non seulement les dates limites précitées, c'est-à-dire les dates de péremption et de la prochaine épreuve hydraulique, mais aussi par exemple un numéro ou code d'identification de la bouteille, le ou les types de gaz contenus dans la bouteille, la contenance nominale de produit contenu dans la bouteille, la tare de la bouteille, le numéro du lot de remplissage et un code-client.

Pour accéder aux informations enregistrées sur l'étiquette 9, l'installation 1 comprend un dispositif 13 de lecture. Ce dispositif 13 comprend un lecteur 15 de code à barres et une unité 16 d'interprétation des signaux délivrés par le lecteur 15.

L'unité fonctionnelle 5 comprend, reliés au dispositif de lecture 13, des moyens d'exploitation 17 des informations relevées par le dispositif 13 lors d'une lecture. Ces moyens 17 comprennent une horloge 19 délivrant la date et l'heure actuelles, des moyens 21 de comparaison de dates dont une entrée est reliée à l'horloge 19 et dont une autre est reliée à une sortie du dispositif 13 de lecture. La sortie des moyens 21 de comparaison est connectée à des moyens 23 d'alarmes. Ces moyens d'alarmes comprennent par exemple un écran d'affichage 25 et des moyens 27 d'émission d'un signal sonore.

En fonctionnement, on saisit avec le lecteur 15 les dates limites mémorisées sur l'étiquette 9. Le dispositif 13 transmet alors ces dates limites aux moyens 17 d'exploitation et plus particulièrement aux moyens 21 de comparaison. Ces moyens 21 comparent les dates limites avec celle délivrée par l'horloge 19. En cas d'un dépassement d'une des dates limites, les moyens 21 de comparaison activent les moyens 23 d'alarme qui affichent un message d'alarme sur l'écran 25 et déclenchent un signal sonore émis par les moyens 27.

L'unité fonctionnelle 5 et le dispositif 13 de lecture sont de préférence installés soit à côté d'un point de raccordement de bouteilles de gaz de l'installation pour empêcher l'utilisation d'un produit périmé, soit sur un poste de réception ou de remplissage de bouteilles vides du fournisseur chargé de la maintenance de son parc de bouteilles de gaz afin de les soumettre régulièrement à une épreuve hydraulique.

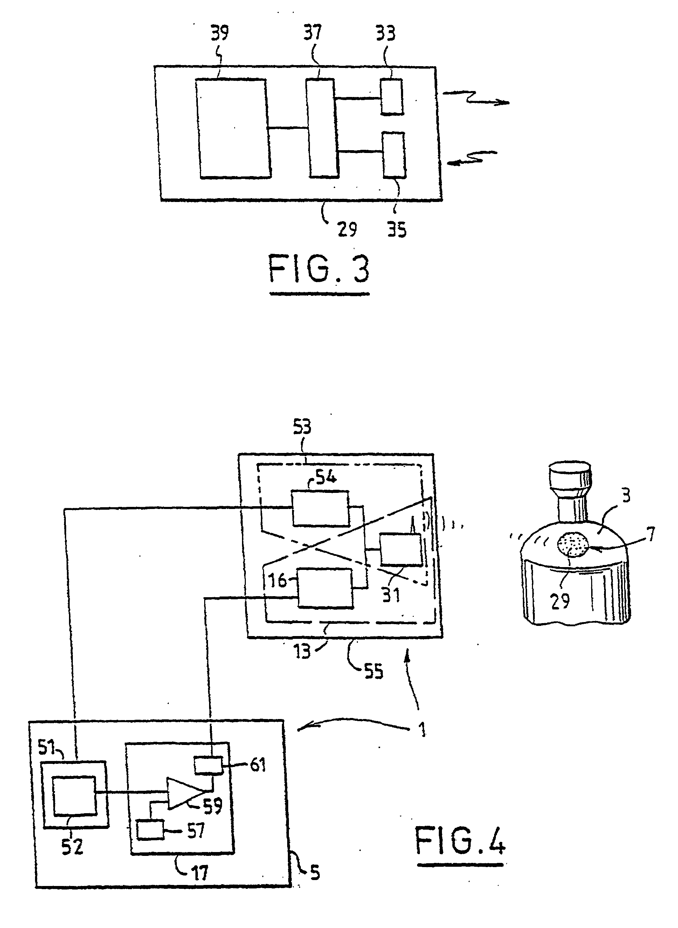

Les figures 2 et 3 montrent un autre mode de réalisation de l'installation 1. Selon ce mode, la tache que l'unité fonctionnelle 5 doit exécuter relative à des bouteilles de gaz 3 concerne la surveillance d'une zone, comme par exemple une zone de sécurité dans une centrale nucléaire, pour empêcher l'introduction dans cette zone de bouteilles de gaz 3 contenant des produits dangereux tels que des produits inflammables.

A cet effet, les informations mémorisées sur le support d'informations 7 comprennent notamment le ou les types de produits contenus dans la bouteille 3. Avantageusement, le support d'informations 7 est réalisé sous la forme d'une étiquette électronique 29 et le dispositif de lecture 13 comprend au lieu du lecteur 15 de code à barres de la figure 1 des moyens 31 dé communication par voie hertzienne adaptés pour recevoir les informations émises par l'étiquette électronique 29.

Les étiquettes électroniques sont connues en soi et par exemple commercialisées par la société GEMPLUS (Gemenos, France). L'autonomie électrique d'une telle étiquette électronique provient d'une pile ou, comme cela est également connu, l'étiquette électronique peut puiser l'énergie nécessaire pour son fonctionnement des ondes radio émises par les moyens 31 de communication du dispositif 13.

La figure 3 montre un schéma synoptique d'une étiquette électronique 29. Elle comprend des moyens d'émission 33 et des moyens de réception 35 d'informations en direction ou en provenance du dispositif 13, une unité 37 de traitement des informations reliée aux moyens 33 et 35, ainsi que des moyens de mémorisation 39 des informations relatives à la bouteille 3 qui sont connectés à l'unité 37.

Comme on le voit sur la figure 2, les moyens d'exploitation 17 de l'unité fonctionnelle 5 comprennent des moyens 41 de mémorisation d'une liste de types de produit admis dans la zone à surveiller, et des moyens 43 de comparaison dont une entrée est reliée aux moyens 41 de mémorisation de la liste et dont une autre entrée est reliée à une sortie du dispositif 13 de lecture. La sortie des moyens 43 de comparaison est reliée à des moyens 45 d'alarme comprenant par exemple une sirène 47 et un gyrophare 49. L'installation est par exemple montée juste devant une porte d'accès à la zone de sécurité.

Lors du fonctionnement de cette installation 1, le dispositif 13 de lecture émet constamment des ondes radio dans une région située devant l'accès à la zone de sécurité afin de détecter le passage d'une bouteille de gaz déplacée par un utilisateur. Dans le cas où une bouteille 3 se trouve dans la région balayée par les ondes radio, l'étiquette 29 émet le ou les types de produit enregistrés dans ses moyens 39 de mémorisation. Ces informations sont reçues par le dispositif 13 de lecture et transmis au moyens de comparaison 43. Si le ou les types de produit lus sur l'étiquette 29 ne se trouvent pas parmi la liste enregistrée dans les moyens 41, les moyens 43 de comparaison activent- les moyens d'alarme 45, c'est-à-dire ils commandent la mise en marche de la sirène 47 ainsi que du gyrophare 49.

Dans un développement non représenté de cet exemple de réalisation, on prévoit de relier les moyens 43 de comparaison en outre à des moyens de blocage de la porte d'accès à la zone de sécurité. Dans le cas d'un résultat négatif de comparaison, les moyens 43 de comparaison envoient un signal de blocage de la porte aux moyens de blocage de celle-ci. Ainsi, on empêche efficacement qu'une bouteille contenant un produit dangereux soit introduite dans la zone de sécurité.

Dans un autre développement non représenté de cet exemple de réalisation, les informations mémorisées sur le support d'informations comprennent en outre le type de bouteille en tant que récipient Dans les moyens 41 de mémorisation est mémorisée une liste de types admis de bouteilles. Ce développement fonctionne de façon analogue à celle du mode de réalisation décrit ci-dessus. Si le type de bouteille ne se trouve pas parmi la liste lors de sa présentation à un dispositif de lecture, une alarme est déclenchée.

La figure 4 montre un mode de réalisation de l'installation 1 dans lequel la tache à exécuter par l'unité fonctionnelle 5 concerne la livraison de bouteilles de gaz et plus particulièrement l'attribution d'une livraison à un client pour la facturation de celui-ci.

A cet effet, les informations enregistrées sur l'étiquette 29 comprennent notamment le numéro d'identification de la bouteille et un code de produit désignant le type et la quantité de produit contenu dans la bouteille 3.

Afin de pouvoir accompagner un livreur lors de ses tournées, l'unité fonctionnelle 5 est portable et embarquée sur un véhicule non représenté de livraison de bouteilles de gaz. Elle comprend des moyens 51 de relevé d'informations relative à ladite tache à exécuter. Plus en détail, les moyens 51 de relevé comprennent un appareil 52 de détermination de la position géographique de l'unité 5 par exemple du type connu sous le nom «GPS différentiel». Un tel appareil qui est connu en soi, délivre la position géographique de l'unité 5 avec une précision d'environ 1m.

Pour pouvoir écrire la position géographique relevée par l'appareil 52 sur l'étiquette électronique 29, l'installation 1 comprend en outre, relié aux moyens 51, un dispositif 53 d'écriture à distance d'informations sur l'étiquette électronique 29. Le dispositif d'écriture comprend les moyens 31 de communication avec l'étiquette 29 et une unité 54 de préparation de signaux pour les envoyer via les moyens 31 à l'étiquette 29. Avantageusement, les dispositifs de lecture 13 et d'écriture 53 utilisent les mêmes moyens 31 de communication et forment une unité 55 commune d'échange d'informations avec l'étiquette électronique 29.

Par ailleurs, les moyens 17 d'exploitation comprennent des moyens 57 de mémorisation d'une liste de sites à réapprovisionner et de leurs positions géographiques ainsi que des moyens 59 de comparaison des positions géographiques de la liste avec celle délivrée par l'appareil 52 lors d'une livraison. Bien entendu par position géographique d'un site, on comprend plus généralement la zone géographique dans laquelle se trouve le site. De plus, les moyens d'exploitation 17 comprennent des moyens de mémorisation 61 des livraisons par client relié d'une part à une sortie des moyens 59 de comparaison et d'autre part à une sortie des informations lues sur l'étiquette 29 de l'unité 55.

Pour pouvoir être embarquée, l'unité fonctionnelle 5 comprend typiquement un ordinateur portable équipé d'un système du type «GPS différentiel» pour la détermination de sa position géographique et d'une unité 55 d'échange d'informations avec l'étiquette électronique 29 de la bouteille 3. L'ordinateur est chargé d'un logiciel adapté pour commander les divers éléments de l'installation 1.

Lors d'une tournée, le véhicule de livraison s'arrête sur les différents sites pour leur livrer les bouteilles commandées. Au cours d'un tel arrêt de livraison, le livreur passe, pour chaque bouteille à livrer, avec les moyens 31 de communication à proximité de l'étiquette 29. L'unité 55 lit alors le numéro d'identification ainsi que le code de produit enregistrés sur l'étiquette 29 pour les transmettre aux moyens d'exploitation 17.

De plus, l'appareil 52 détermine la position géographique de l'unité fonctionnelle 5 et donc celle du site sur lequel elle se trouve. L'unité 5 délivre cette position d'une part à l'unité 55 d'échange d'informations pour que celle-ci l'envoie à l'étiquette 29 pour l'enregistrement de cette position dans les moyens 39 de mémorisation, et d'autre part aux moyens de comparaison 59. Ces derniers comparent la position relevée avec celles de la liste des moyens 57 de mémorisation pour associer la livraison de la bouteille au site dont la position coïncide avec celle relevée par l'appareil 52. Le site, le numéro d'identification de la bouteille et le code produit sont alors enregistrés dans les moyens 61 et peuvent, au retour de la tournée de livraison, être exploités pour la facturation des clients.

Ainsi, la facturation des clients est facilitée et le fournisseur acquiert une meilleure connaissance sur la répartition géographique de son parc de bouteilles.

Grâce aux informations écrites sur l'étiquette électronique 29, on contrôle également si par exemple, au sein d'une même entreprise, une bouteille a été transférée d'un site à un autre ce qui permet de affiner la facturation par site, notamment en ce qui concerne la taxe de location de la bouteille.

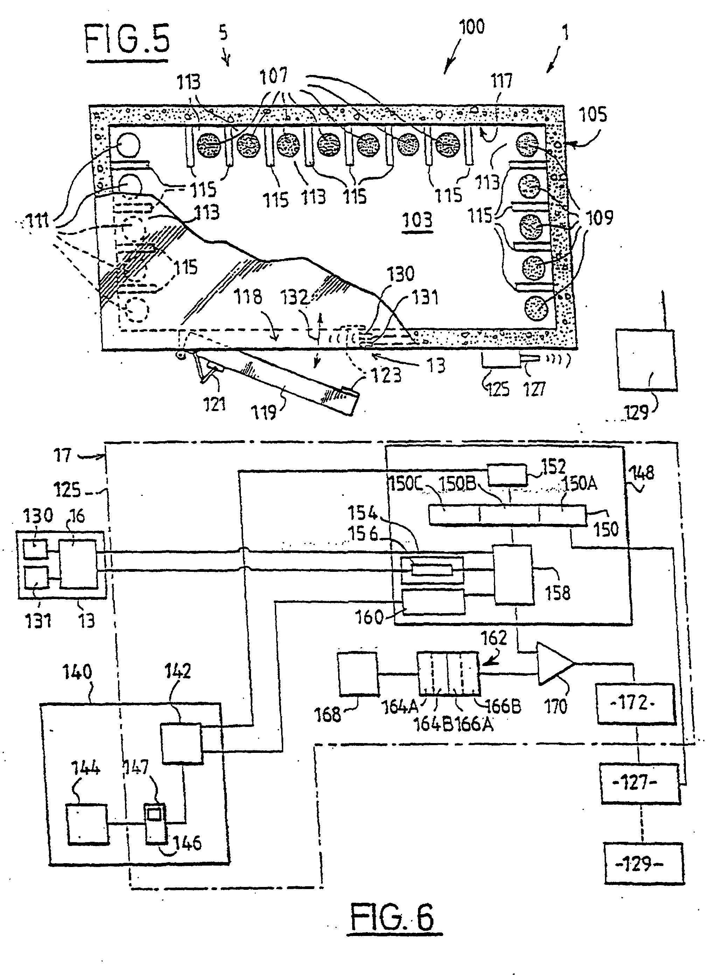

La figure 5 montre une installation de suivi de conteneurs, en l'occurence des bouteilles de gaz, selon l'invention, comprenant une zone de stockage ou un poste 100 de distribution d'un stock de bouteilles.

Ce poste 100 comprend un espace de stockage 103 de bouteilles, situé à l'intérieur d'un local fermé 105. A l'intérieur de l'espace de stockage 103 est disposé un stock de différentes bouteilles 107, 109 et 111. Chaque bouteille est reçue dans un emplacement 113 prévu à cet effet. Ces emplacements 113 sont séparés les uns des autres par des barres horizontales 115 fixées contre un mur 117 du local 105.

Parmi les bouteilles de gaz, on distingue des bouteilles pleines 107 et 109 de types différents, telles que des bouteilles d'acétylène et des bouteilles d'oxygène, ainsi que des bouteilles vides 111. Les bouteilles pleines 107 et 109 sont destinées à être distribuées à des utilisateurs, et les bouteilles vides 111 doivent être reprises et/ou échangées par le foumisseur de bouteilles de gaz contre des bouteilles pleines. Toutes les bouteilles 107, 109 et 111 sont équipées d'une étiquette électronique 29.

Pour accéder à l'espace de stockage 103, le local 105 comporte un accès 118 qui peut être fermé à l'aide d'une porte 119 d'entrée au local 105 pour bloquer les bouteilles 107, 109 et 111 à l'intérieur de l'espace de stockage 103. A cet effet, la porte 119 comprend une fermeture automatique 121 telle que celles commercialisées sous la marque "Groom", et dispose d'un dispositif de verrouillage automatique 123.

Les moyens d'exploitation 17 de l'unité fonctionnelle 5, c'est-à-dire du poste 100, sont réalisés sous la forme d'une unité centrale 125 disposée à l'extérieur du local 105. Cette unité 125 est chargée de contrôler l'accès à l'espace de stockage 103, de gérer le stock de bouteilles, et, en cas de besoin, de déclencher une commande de réapprovisionnement A cet effet, elle comporte différents moyens qui seront décrits en détail en référence à la figure 6 et dont certains peuvent être mis en oeuvre par un ordinateur ou par un automate chargé d'un programme d'exécution.

En référence à la figure 5, il est encore à noter que l'unité 125 est reliée aux moyens de commande du dispositif 123 de verrouillage automatique. Par ailleurs, il comprend des moyens de transmission 127 pour dialoguer avec un centre de réapprovisionnement 129 de bouteilles de gaz

Les moyens 127 de transmission et les moyens de réception correspondants du centre 129 de réapprovisionnement peuvent être de tout type, notamment des moyens de transmission par voie hertzienne.

De plus, le poste 100 est équipé d'un dispositif 13 de lecture d'informations dont seules deux têtes de lecture/écriture 130, 131 sont représentées. Les têtes 130, 131 sont identiques aux moyens 31 de communication et son disposées l'une derrière l'autre dans le sens de passage des bouteilles dans l'accès 118 qui est indiqué par la flèche double 132. De préférence, ces têtes 130 et 131 sont incorporées soit dans le montant de la porte 119 opposé à celui portant le battant de la porte 119, soit dans un portique séparé prévu à cet effet.

Le schéma synoptique de la structure de l'installation 1 de la figure 5 est représenté sur la figure 6.

L'installation 1 comprend des moyens d'autorisation 140 à un utilisateur d'enlèvement d'au moins une bouteille disposée dans l'espace de stockage 103. A cet effet, ils comprennent des moyens d'identification 142 d'un utilisateur tels que par exemple un lecteur à badge, un "digicode" ou tout autre moyen d'identification automatique. On prévoit d'installer ces moyens d'identification 142 dans l'unité centrale 125.

Afin de défendre l'accès aux bouteilles 107, 109 et 111 à des personnes non-autorisées, les moyens d'autorisation comportent d'une part des moyens de blocage 144, à savoir la porte 119 et le dispositif de verrouillage 123 de la porte suivant l'exemple de la figure 5. Ces moyens de blocage 144 sont commutables entre une position de blocage des bouteilles 107, 109 et 111 disposées dans ledit espace de stockage 103 (porte verrouillée), et une position de distribution (porte 119 ouverte) dans laquelle au moins une des bouteilles 107 et 109 peut être enlevée par un utilisateur autorisé. D'autre part, ils comportent des moyens de commande 146 desdits moyens de blocage 144. Ces moyens de commande 146, situés dans l'unité centrale 125, sont connectés aux moyens d'identification 142 afin que l'accès aux bouteilles ne soit donné qu'aux utilisateurs autorisés. Par mesure de sécurité, les moyens de commande 146 comportent des moyens de temporisation 147 pour commuter des moyens de blocage 144 vers la position de blocage automatiquement après un certain délai.

Pour assurer qu'un nombre suffisant de bouteilles pleines soit toujours disposé dans l'espace de stockage 103, l'unité centrale 125 comprend des moyens d'évaluation 148 du stock de bouteilles. Ces moyens d'évaluation 148 du stock comprennent des moyens de mémorisation 150 de l'état du stock chargés à l'aide de moyens 152 d'entrée d'un état initial de stock. Les moyens de mémorisation 150 comportent trois emplacements de mémoire 150A, 150B et 150C associés respectivement aux bouteilles 107, 109 et 111. Les moyens 152 sont connectés aux moyens d'identification 142. Ils reçoivent de ces derniers un signal d'autorisation pour que seuls le fournisseur et une personne responsable de l'installation puissent mettre à jour l'état du stock dans les moyens 150 de mémorisation. De plus, les moyens d'évaluation 148 du stock comprennent des moyens 154 de relevé d'un enlèvement ou d'une pose d'une bouteille pour détecter si un utilisateur enlève ou rapporte une bouteille de gaz. Ces moyens 154 sont reliés au dispositif de lecture 13. Les moyens 154 comprennent, reliés au dispositif 13 de lecture, des moyens 156 de déduction du sens de déplacement des bouteilles dans l'accès 118 pour détecter, à partir de l'analyse temporelle des signaux délivrés par les tètes 130, 131 du dispositif 13, si un utilisateur enlève ou rapporte une bouteille de gaz.

Les moyens d'évaluation 148 comprennent en outre des moyens de calcul 158 auxquels sont connectés les moyens 150 de mémorisation de l'état du stock ainsi que les moyens 154 de relevé d'un enlèvement ou d'une pose d'une bouteille et le dispositif 13 de lecture.

A partir de l'état du stock reçu par les moyens 150 de mémorisation ainsi qu'à partir des informations délivrées par le dispositif 13 lors du passage d'une bouteille et à partir de l'information sur un enlèvement ou une pose d'une bouteille relevée par les moyens 154, les moyens de calcul 158 établissent un nouvel état du stock.

De plus, les moyens d'évaluation 148 comprennent des moyens de mémorisation 160 de codes d'identification des bouteilles de gaz enlevées ou rapportées associés à l'identité d'un utilisateur. A cet effet, ces moyens 160 sont reliés d'une part aux moyens d'identification 142 et d'autre part aux moyens de calcul 158 qui leur délivrent ledit code d'identification comprenant notamment le type et la contenance nominale de gaz contenue de la bouteille.

Les moyens d'exploitation 17, c'est-à-dire l'unité centrale 125, comprennent en outre des moyens de mémorisation 162 d'au moins un seuil minimum de bouteilles pleines devant être présentes dans l'espace de stockage 103. De préférence, les moyens de mémorisation 162 comprennent pour chaque type de bouteilles deux emplacements de mémoire, un premier pour mémoriser un seuil de sécurité servant au déclenchement d'une commande normale de réapprovisionnement, et un second pour mémoriser un seuil d'urgence servant au déclenchement d'une commande d'urgence de réapprovisionnement. Bien entendu, le seuil de sécurité est supérieur au seuil d'urgence. Dans l'exemple des figures 5 et 6, les moyens de mémorisation 162 comprennent quatre emplacements de mémoire, deux 164a, 164b pour les bouteilles d'acétylène et deux 166a, 166b pour les bouteilles d'oxygène. Les moyens de mémorisation 162 sont reliés à des moyens d'entrée de valeurs de seuil 168 pour que ces seuils puissent être adaptés aux besoins des utilisateurs.

L'installation 1 est équipée de moyens de comparaison 170 du stock avec les seuils. A cet effet, une sortie des moyens de calcul 158 et une sortie des moyens de mémorisation 162 sont reliées à des entrées correspondantes des moyens de comparaison 170.

Les moyens de comparaison 170 du stock sont connectés à des moyens 172 de déclenchement d'une commande de réapprovisionnement. La sortie des moyens 172 de déclenchement est reliée à une entrée des moyens de transmission 127 d'une commande de réapprovisionnement au centre 129.

Une autre entrée des moyens 127 de transmission est reliée à une sortie des moyens 150 de mémorisation de l'état du stock pour pouvoir transmettre à tout moment l'état actuel du stock de bouteilles disposées dans l'espace de stockage 103 au centre 129 de réapprovisionnement.

Comme on le voit sur la figure 6, l'unité centrale 125, délimitée par des traits mixtes, comprend les moyens 142, 146, 147, 148, 162, 168, 170 et 172.

L'installation 1 des figures 5 et 6 fonctionne de la manière suivante.

Un utilisateur autorisé qui veut rapporter une bouteille vide et enlever une bouteille pleine, par exemple d'oxygène, s'identifie aux moyens 142 d'identification.

Après avoir reconnu l'utilisateur, les moyens 142 d'identification envoient un signal d'autorisation aux moyens 146 de commande des moyens de blocage 144. Les moyens 146 de commande envoient alors un signal de déverrouillage aux moyens de blocage 144. En se référant à la figure 5, cela signifie que le dispositif 123 de verrouillage automatique est désactivé, et l'utilisateur peut ouvrir la porte 119 pour placer la bouteille vide dans l'espace de stockage 103 ainsi que par exemple enlever une bouteille pleine d'oxygène 109.

Lors de chaque passage d'une bouteille, le dispositif 13 lit sur l'étiquette électronique 29 de la bouteille le numéro d'identification de la bouteille ainsi que le type et la quantité de gaz contenu dans celle-ci et les moyens 156 déduisent à partir des signaux mesurés par les tètes 130, 131 le sens de déplacement de la bouteille, et donc si celle-ci est enlevée ou rapportée. Toutes ces informations sont transmises au moyens 158 de calcul.

Les moyens de calcul 158 incrémentent d'une unité le nombre de bouteilles vides mémorisé dans les moyens 150A de mémorisation de l'état du stock dans le cas où les moyens 154 détectent qu'une bouteille a été rapportée, et décrémentent d'une unité par exemple le nombre de bouteilles d'oxygène mémorisé dans les moyens 150B dans le cas où les moyens 154 détectent l'enlèvement d'une bouteille 109.

De préférence, après que l'utilisateur a terminé ses opérations et que le dispositif 123 de verrouillage a été réactivé par les moyens 146 de commande, le nouvel état du stock est transmis par les moyens 158 aux moyens 170 de comparaison du stock avec les seuils mémorisés dans les moyens 162 de mémorisation des seuils. Les moyens 170 de comparaison comparent, par type de bouteilles, le nouvel état du stock avec les seuils correspondants. Si le nombre de bouteilles pleines de tous les types de bouteilles est supérieur aux seuils correspondants prédéfinis par l'utilisateur, les moyens 170 ne transmettent aucun signal de commande. Si par contre le nombre de bouteilles pleines d'au moins un type est inférieur au seuil correspondant prédéfini, alors une commande de réapprovisionnement, normale ou d'urgence est déclenchée en fonction du seuil franchi, par un signal de commande envoyé par les moyens 170 de comparaison aux moyens 172 de déclenchement d'une commande. Ensuite, les moyens 172 de déclenchement envoient un signal aux moyens de transmission 127 afin que ceux-ci transmettent la commande au centre 129 de réapprovisionnement.

Dans le cas d'un réapprovisionnement de l'installation par un fournisseur, celui-ci est alors identifié en tant que fournisseur par les moyens 142 d'identification. Ces moyens 142 d'identification activent alors les moyens 152 d'entrée d'un état initial du stock afin que le fournisseur puisse éventuellement mettre à jour l'état du stock dans les moyens 150 de mémorisation au cas où une action frauduleuse a perturbé la gestion du stock. Cette fonction de remettre à jour l'état du stock peut aussi être attribuée à un responsable du poste 100.

Dans un développement du poste représenté à la figure 5 destiné notamment à une installation pour la vente de bouteilles de gaz, on prévoit d'équiper chaque emplacement 113 d'un dispositif 13 de lecture au lieu de prévoir un seul dispositif 13 de lecture pour tout le poste, dont les tètes de lecture sont disposées dans l'accès à l'espace de stockage. Chaque dispositif 13 est relié aux moyens 148 d'évaluation du stock de bouteilles et plus particulièrement aux moyens 158 de calcul et aux moyens 154 de relevé d'un enlèvement ou d'une poste d'une bouteille. Chaque dispositif 13 remplit alors en plus la fonction de détecteur de présence d'une bouteille dans l'emplacement auquel il est associé.

Le fonctionnement de ce développement est analogue à celui décrit en référence aux figures 5 et 6 mais au lieu de détecter les codes d'identification des bouteilles qui entrent et sortent de l'espace de stockage et leurs sens de déplacement dans l'accès, les dispositifs 13 de lecture de chaque emplacement relèvent seulement les codes d'identification des bouteilles de gaz qui sont correctement placées dans les emplacements 113 et délivrent aux moyens 154 de relevé d'un enlèvement ou d'une pose de bouteille un signal de présence ou non d'une bouteille. Par le fait qu'une bouteille est seulement enregistrée comme étant rapportée lorsque un dispositif est contraint de replacer correctement la bouteille de gaz rapportée dans un emplacement 113 prévu à cet effet. Un utilisateur qui ne rapporte pas correctement sa bouteille de gaz est pénalisé car, du fait que la bouteille de gaz n'est pas enregistrée comme étant rapportée, elle continue à lui être imputée pour le paiement de la taxe de location.

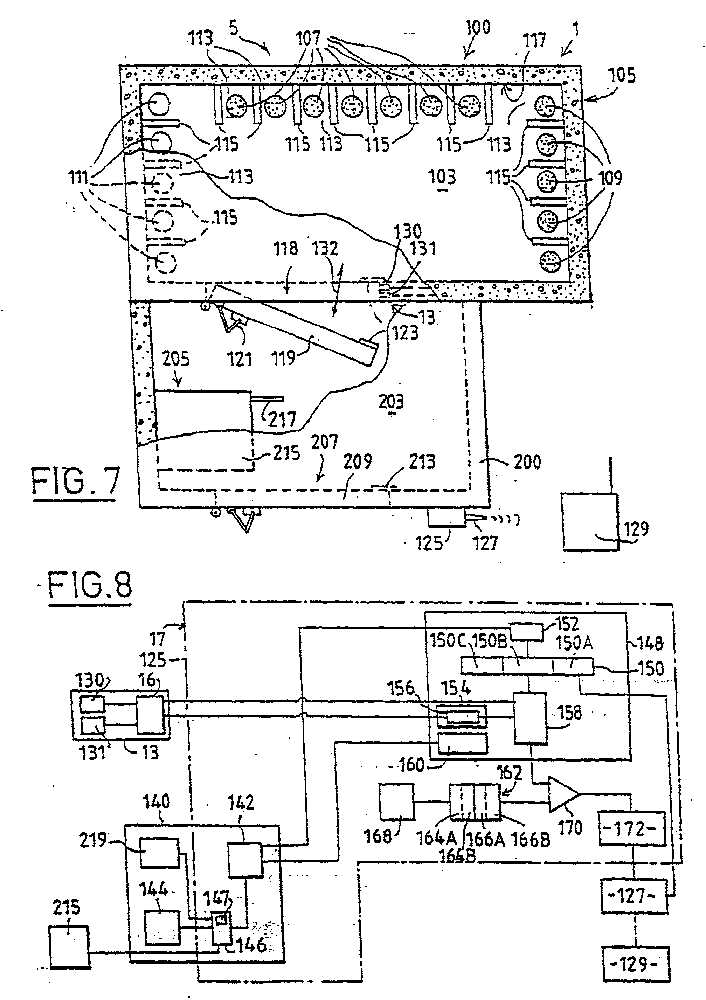

La figure 7 montre une variante du poste de la figure 5 permettant la gestion d'un tel poste au moyen d'étiquettes électroniques 29 et de dispositifs de lecture d'informations même pour des bouteilles qui ne sont pas préalablement équipées d'une étiquette électronique.

A cet effet, l'installation 1 comprend en outre un sas d'accès 200 au poste 100 de distribution d'un stock de bouteilles de gaz, dont la paroi arrière est formée par la partie d'accès du local 105 dans laquelle est installée la porte 119.

Le sas 200 délimite une enceinte 203 à l'intérieur de laquelle est disposée une station 205 de montage de supports d'informations, notamment d'étiquettes électroniques, sur des bouteilles de gaz et de démontage de ceux-ci.

Pour accéder à l'enceinte 203, le sas 200 comporte un accès 207 qui peut être fermé à l'aide d'une porte 209 d'entrée, représentée à l'état fermé. La porte 209 est identique à la porte 119 et dispose également d'un dispositif de verrouillage automatique 213 identique au dispositif 123.

L'unité centrale 125 est monté à côté de la porte 209 d'entrée au sas 200 est non seulement reliée aux moyens de commande du dispositif 123, mais aussi aux moyens de commande du dispositif 213.

La station 205 comprend un appareil 215 de distribution et de reprise automatique d'étiquettes électroniques 29 et, attaché à l'appareil 215, un outil 217 spécifique de montage et de démontage. Cet outil 217 est adapté de telle sorte qu'il est indispensable pour monter une étiquette électronique 29 sur une bouteille de gaz, et notamment pour enlever une telle étiquette afin d'empêcher un démontage frauduleux.

Sur la figure 8 est représenté le schéma synoptique de la structure de l'installation 1 de la figure 7. Ce schéma se distingue de celui de la figure 6 par le fait que les moyens d'autorisation 140 comprennent en outre des moyens 219 de blocage du sas, à savoir la porte 209 d'entrée au sas 200 et le dispositif 213 de verrouillage. Ces moyens 219 de blocage sont commutables entre une position de blocage (porte 209 verrouillée) et une position d'accès à l'enceinte 203 (porte 209 ouverte). Les moyens 219 de blocage sont reliés aux moyens 146 et commandés par ceux-ci de telle sorte que le dispositif 123 et le dispositif 213 ne sont jamais simultanément en position inactive. De plus, l'appareil 215 est également reliée aux moyens 146 afin d'envoyer à ces moyens 146 des signaux correspondants à la distribution ou la reprise d'une étiquette électronique 29 ou de recevoir un signal correspondant à l'état d'activation des dispositifs de verrouillage 123 et 213.

En fonctionnement, un utilisateur autorisé s'identifie aux moyens 142 d'identification. Après avoir reconnu l'utilisateur, les moyens 142 d'identification envoient un signal d'autorisation aux moyens 146 de commande des moyens de blocage 144 et 219. Les moyens 146 de commande envoient alors un signal de déverrouillage aux moyens de blocage 219. En se référant à la figure 7, cela signifie que le dispositif 213 de verrouillage automatique est désactivé, et l'utilisateur peut ouvrir la porte 209 pour pénétrer avec sa bouteille vide dans l'enceinte 203. Après un délai prédéfini, le dispositif 213 est réactivé par les moyens 146 de commande et l'utilisateur se trouve enfermé dans l'enceinte 203. Bien entendu, pendant ce temps là, le dispositif 123 de verrouillage reste activé de sorte que l'accès au poste 100 de distribution est encore défendu.

Les moyens 146 de commande envoient un signal à l'appareil 215 pour signaler à celui-ci que la porte 209 est à nouveau fermée. A la réception de ce signal, l'appareil 215 distribue une étiquette électronique 29. L'utilisateur peut alors monter l'étiquette électronique 29 sur la bouteille vide au moyen de l'outil 217. Les informations enregistrées sur les étiquettes électroniques distribuées comprennent notamment l'état vide de la bouteille pour permettre par la suite aux moyens 148 d'évaluer correctement le stock de bouteilles dans l'espace 103.

Suite à la distribution de l'étiquette, l'appareil 215 envoie aux moyens de commande 146 un signal de distribution d'une étiquette électronique 29. Les moyens 146 envoient alors un signal de déverrouillage au moyen de blocage 144. L'utilisateur peut alors accéder à l'espace de stockage 103 et remettre sa bouteille vide ainsi que prendre une bouteille pleine. Bien entendu toutes les bouteilles 107, 109, 111, disposées dans l'espace de stockage 103 sont équipées d'une étiquette électronique 29.

La suite du fonctionnement de l'installation des figures 7 et 8 notamment en ce qui concerne les moyens 148 d'évaluation du stock est analogue à celui de l'installation des figures 5 et 6.

Après être sorti de l'espace de stockage 103, l'utilisateur referme la porte 119 et les moyens de commande 146 réactivent des moyens de blocage 144. Les moyens 146 de blocage sont agencés de telle sorte que la porte 209 du sas 200 ne s'ouvre qu'à condition que l'utilisateur remet l'étiquette électronique 29 montée sur la bouteille pleine qu'il a prise, à l'appareil 215. L'utilisateur démonte alors l'étiquette électronique 29 à l'aide de l'outil 217 et remet celle-ci à l'appareil 215. L'appareil 215 envoie alors un signal de reprise d'une étiquette aux moyens de blocage 146 qui désactivent les moyens de blocage 219 de sorte que l'utilisateur peut ouvrir la porte 209 et sortir avec sa bouteille pleine. Après un certain délai, des moyens 146 réactivent les moyens de blocage 209.

Par ailleurs, on prévoit d'équiper le poste de moyens de réception et de contrôle du fonctionnement, destinés à recevoir des signaux de commande du centre 129 de réapprovisionnement en vue d'un contrôle à distance de l'état de fonctionnement du poste 100.

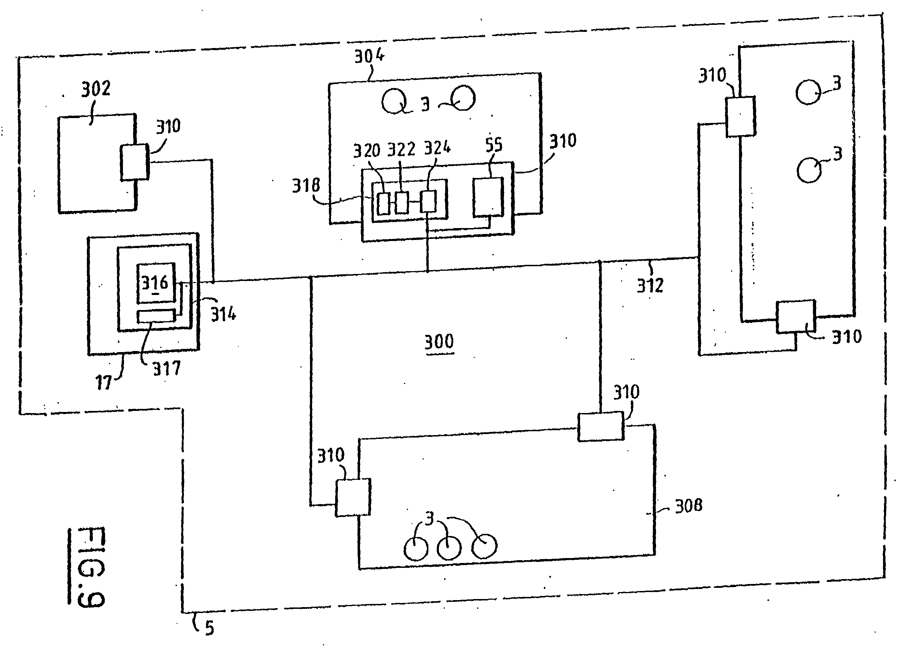

La figure 9 montre une installation 1 selon l'invention dans laquelle l'unité fonctionnelle 5 est un système de localisation de bouteilles de gaz 3 sur un site industriel 300.

Ce système comprend, réparti sur tout le site 300, différentes zones 302, 304, 306 et 308 d'utilisation ou de stockage de bouteilles de gaz. On prévoit par exemple qu'une des zones 302, 304, 306, 308 est un poste de distribution d'un stock de bouteilles tel qu'il a été décrit ci-dessus.

Chaque zone 302, 304, 306, 308 comprend au moins un accès 310. Comme représentée sur l'accès central supérieur 310, une unité 55 de lecture et d'échange d'informations avec les étiquettes électroniques 29 montées sur des bouteilles 3 est associée à chaque accès 310. Ces unités 55 sont reliées par l'intermédiaire d'un bus informatique 312 aux moyens 17 d'exploitation. Ces moyens 17 d'exploitation comprennent des moyens 314 de détermination des positions des bouteilles sur le site. A cet effet, ils comprennent des moyens 316 de mémorisation de codes d'identification de bouteilles associés à un code de la zone 302, 304, 306 ou 308 dans laquelle chaque bouteille 3 a été introduite.

Par ailleurs, les moyens 314 de détermination des positions des bouteilles comprennent en outre des moyens 317 de mémorisation des déplacements successifs des bouteilles entre les différentes zones 302, 304, 306 et 308 de stockage ou d'utilisation. De préférence, les moyens 317 mémorisent non seulement le déplacement d'une bouteille, mais aussi l'identité de l'utilisateur ayant effectué ce déplacement.

A cet effet, l'accès 310 de chaque zone 302, 304, 306, 308 comprend des moyens d'autorisation 318 identiques aux moyens d'autorisation 140 décrits en référence aux figures 5 et 6. C'est-à-dire ces moyens d'autorisation 318 comportent des moyens 320 de blocage de bouteilles de gaz dans la zone concernée, par exemple une porte et un dispositif de verrouillage de la porte et d'autre part des moyens 322 de commande des moyens de blocage ainsi que des moyens 324 d'identification d'un utilisateur pour donner l'accès aux différentes zones 302, 304, 306 et 308 seulement aux utilisateurs autorisés.

Les moyens d'identification 324 sont également reliés aux bus 312 pour transmettre l'identité de l'utilisateur au moyen de mémorisation 317.

Lorsqu'un utilisateur veut par exemple déplacer une bouteille 3 de la zone 304 vers la zone 306, il se présente à l'accès 310 de la zone 304 afin de s'identifier et avoir accès à cette zone.

Les moyens 318 d'autorisation lui donnent accès à la zone 304 et l'utilisateur peut enlever une bouteille 3 de cette zone 304. Lorsqu'il sort la bouteille 3, l'unité 55 transmet aux moyens de mémorisation 316 le code d'identification de la bouteille 3 ainsi que le fait que la bouteille a été enlevée de la zone 304. Les moyens 324 d'identification transmettent aux moyens 316 l'identité de l'utilisateur.

Ensuite, l'utilisateur se présente à un des accès 310 de la zone 306. Il s'identifie aux moyens d'identification 324 afin que les moyens d'autorisation 318 lui donnent accès à cette zone. Lorsqu'il introduit la bouteille 3 dans la zone 306, les moyens 324 d'identification ainsi que l'unité 55 transmettent respectivement aux moyens 316 l'identité de l'utilisateur ainsi que le code d'identification de la bouteille, un code d'identification de la zone dans laquelle la bouteille a été introduite. Les moyens 316 mémorisent alors le code d'identification de la bouteille associée au code d'identification de la zone ce qui permet, par une simple interrogation des moyens 316 de mémorisation, de savoir où se trouve chaque bouteille de gaz disposée sur le site 300. Les moyens 317 mémorisant le déplacement de la bouteille ainsi que l'identité de l'utilisateur ayant effectué ce déplacement A cet effet, les moyens 317 mémorisent les codes d'identification des zones desquelles la bouteille a été respectivement enlevée et rapportée, le code d'identification de la bouteille et l'identité de l'utilisateur.

Lors du franchissement d'un des accès 310, la zone dans laquelle la bouteille a été introduite ou de laquelle elle a été enlevée, est également mémorisée sur l'étiquette électronique 29 afin de pouvoir déceler ultérieurement des opérations frauduleuses avec les bouteilles de gaz

A partir des moyens 317, des statistiques sur la consommation et le taux de rotation des bouteilles par zone ainsi qu'un historique des déplacements par bouteille peuvent être établies et mises à la disposition du client

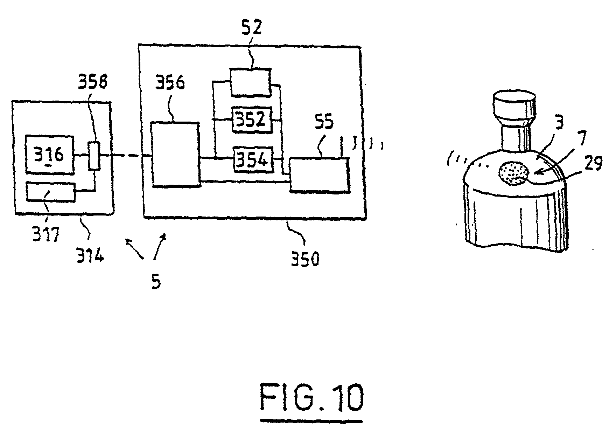

La figure 10 présente une variante de l'installation de la figure 9 dans laquelle l'unité fonctionnelle 5 comprend un terminal portable 350.

Le terminal portable 350 comporte une unité 55 d'échange d'informations, un appareil 52 de détermination de la position géographique du terminal 350 par exemple du type connu sous le nom « GPS différentiel », des moyens 352 d'identification d'un utilisateur, une horloge 354 et des moyens 356 de communication, notamment sans fil, avec les moyens 314 de détermination des positions des bouteilles pour transmettre à ceux-ci, après un déplacement de bouteille, l'identité de l'utilisateur ayant effectué ce déplacement, le code d'identification de la bouteille déplacée qui est lue sur l'étiquette électronique 29 ainsi que la position géographique délivrée par l'appareil 52 de détermination de cette position géographique et, de plus, la date et l'heure délivrées par l'horloge 354.

De préférence, le terminal portable 350 est formé par un ordinateur portable équipé d'un système du type GPS pour la détermination de sa position géographique et d'une unité 55 d'échange d'informations avec les étiquettes électroniques 29 d'une bouteille 3. Par ailleurs, l'ordinateur comprend en plus les moyens de communication 356 avec des moyens 358 complémentaires de communication des moyens 314 des détermination des positions des bouteilles sur le site 300, par exemple par voie hertzienne.

Un utilisateur qui veut déplacer une bouteille de gaz 3, se munit au préalable d'un terminal portable 350 et la déplace vers son point de destination. Lorsque la bouteille 3 est déposée au point de destination, les informations mémorisées sur l'étiquette 29 sont lues au moyen de l'unité 55 et la position géographique et l'identification de l'utilisateur sont écrites sur l'étiquette 29 et communiquées aux moyens 314. Au lieu d'un code d'identification d'une zone, les moyens 314 interprètent directement la position géographique des bouteilles et enregistrent celle-ci, ensemble avec le code d'identification de la bouteille et l'identité de l'utilisateur dans les moyens 316. De plus, ces informations sont également transmises aux moyens 317 pour la mémorisation des déplacements successifs de bouteilles effectués par chaque utilisateur.

## Revendications

1. Installation de suivi de conteneurs (3 ; 107; 109 ; 111) équipés chacun d'un support d'informations (7), comprenant au moins une zone délimitée de stockage (103; 300 ; 302 ; 304; 306; 308) des conteneurs comportant au moins un passage d'accès (118 ; 310) pour un utilisateur à la zone de stockage pourvu d'au moins un dispositif (142) d'identification de l'utilisateur et d'au moins un dispositif de lecture (13 ; 55) apte à lire les informations sur le support d'informations (7) des conteneurs, et des moyens d'exploitation de données exploitant au moins des informations relevées par le dispositif de lecture (13).

2. Installation selon la revendication 1, **caractérisée en ce que** les moyens d'exploitation comportent des moyens (148) d'évaluation du stock de conteneurs entreposés dans la zone de stockage.

3. Installation selon la revendication 1 ou 2, **caractérisée en ce que** les moyens d'exploitation comportent des moyens de détermination des positions des conteneurs dans la zone de stockage (103 ; 300).

4. Installation selon l'une des revendications 1 à 3, **caractérisée en ce que** la zone de stockage (103 ; ...303) comporte au moins un poste (100) de distribution de conteneurs (107, 109, 111) comprenant un espace de stockage (103) des conteneurs et des moyens d'autorisation (140) d'enlèvement d'au moins un conteneur disposé dans ledit espace de stockage (103), lesdits moyens d'autorisation (140) comportant, d'une part, des moyens de blocage (144), commutables entre une position de blocage des conteneurs disposés dans l'espace de stockage (103) et une positien de distribution dans laquelle au moins un conteneur est autorisé à être enlevé, et, d'autre part, des moyens de commande (146) desdits moyens de blocage (144).

5. Installation selon l'une des revendications 2 à 3, **caractérisée en ce que** les moyens d'exploitation des informations comprennent en outre des moyens de mémorisation (162) d'au moins un seuil minimal de conteneurs pleins, des moyens de comparaison (170) du stock avec le seuil minimal de conteneurs pleins, des moyens de déclenchement d'une commande de réapprovisionnement, commandés par les moyens de comparaison (170) du stock avec le seuil minimal, et des moyens de transmission (127) de la commande de réapprovisionnement à un centre de réapprovisionnement (129).

6. Installation selon la revendication 5, **caractérisée en ce que** les moyens de mémorisation (162) d'au moins un seuil minimal comprennent au moins un emplacement (164A, 166A) de mémoire par type de conteneur pour mémoriser au moins un seuil minimal par type de bouteille.

7. Installation selon la revendication 6, **caractérisée en ce que** les emplacements de mémoire (164A, 164B; 166A, 166B) par type de conteneur comprennent, d'une part, un emplacement de mémoire (164A; 166A) d'un seuil de sécurité servant au déclenchement d'une commande normale de réapprovisionnement, et, d'autre part, un emplacement de mémoire (164B; 166B) d'un seuil d'urgence servant au déclenchement d'une commande d'urgence de réapprovisionnement.

8. Installation selon l'une quelconque des revendications 4 à 7, **caractérisée en ce que** les moyens d'évaluation (148) du stock comprennent des moyens de mémorisation (150) de l'état du stock reliés aux moyens de transmission (127) pour la transmission d'un état du stock au centre (129) de réapprovisionnement, cet état comprenant notamment le nombre et le type de conteneurs pleins (107, 109) du stock.

9. Installation selon l'une quelconque des revendications 4 à 8, **caractérisée en ce que** les moyens d'évaluation (148) du stock comprennent des moyens (154) de relevé d'un enlèvement ou d'une pose d'un conteneur pour détecter si un utilisateur enlève ou rapporte un conteneur.

10. Installation selon l'une quelconque des revendications 1 à 9, **caractérisée en ce que** chaque dispositif de lecture comprend deux têtes (130, 131) de lecture disposées l'une derrière l'autre dans le sens (132) de passage des conteneurs (107, 109, 111) dans cet accès (118), et **en ce que** les moyens (154) de relevé d'un enlèvement ou d'une pose d'un conteneur comprennent, reliés au ou à chaque dispositif (13) de lecture, des moyens (156) un utilisateur enlève ou rapporte un conteneur.

11. Installation selon l'une des revendications précédentes, **caractérisée en ce que** la zone de stockage (103) comprend des emplacements (113) séparés destinés à recevoir chacun un conteneur (107, 109, 111), un dispositif (13) de lecture des informations se trouvant sur les supports d'informations (29) des conteneurs étant disposé dans chaque emplacement (103) et relié aux moyens (154) de relevé d'un enlèvement ou d'une pose d'un conteneur pour délivrer à ces derniers moyens un signal de présence d'un conteneur dans l'emplacement (103) considéré afin de détecter si un utilisateur a enlevé ou rapporté un conteneur.

12. Installation selon l'une quelconque des revendications 9 à 11, **caractérisée en ce que** les moyens d'évaluation (148) du stock comprennent des moyens de calcul (158) connectés aux moyens de mémorisation (150) de l'état du stock, aux moyens (154) de relevé d'un enlèvement ou d'une pose d'un conteneur ainsi qu'au ou aux dispositifs (13) de lecture des informations se trouvant sur les supports d'informations (29) des conteneurs, pour évaluer le stock de conteneurs vides et pleins, de préférence par type de conteneurs enlevés ou rapportés, le nombre et le type étant relevés par le ou les dispositifs (13) de lecture, et à partir de l'information sur un enlèvement ou une pose d'un conteneur relevé par lesdits moyens (154) de relevé d'un enlèvement ou d'une pose d'un conteneur.

13. Installation selon l'une quelconque des revendications 4 à 12, **caractérisée en ce que** les moyens d'autorisation (140) incluent lesdit moyens d'identification (142) d'un utilisateur qui sont connectés aux moyens (148) d'évaluation du stock, et **en ce que** les moyens (148) d'évaluation du stock comprennent des moyens (160) de mémorisation des codes d'identification des conteneurs enlevés et/ou rapportés, ces codes étant lus par le dispositif (13) de lecture et associés à l'identité d'un utilisateur délivrée par les moyens (142) d'identification en vue de la facturation de l'utilisateur.

14. Installation selon l'une quelconque des revendications 4 à 13, **caractérisée en ce que** le poste de distribution (100) comprend des moyens de réception et de contrôle à distance du fonctionnement du poste (100), destinés à recevoir des signaux de commande du centre (129) de réapprovisionnement.

15. Installation selon l'une des revendications précédentes pour des conteneurs initialement dépourvus de support d'informations, **caractérisée en ce qu'**elle comprend en outre un sas (200) d'accès à la zone de stockage (103...300), le sas comprenant une station (205) de montage et de démontage de supports (7) d'informations sur un conteneur.

16. Installation selon la revendication 15, **caractérisée en ce que** la station (205) de montage et de démontage des supports (7) d'informations comprend un appareil (215) de distribution et de reprise de supports (7) d'informations, notamment d'étiquettes électroniques (29).

17. Installation selon l'une des revendications précédentes, **caractérisée en ce que** les moyens (17) d'exploitation comprennent des moyens (57) de mémorisation d'une liste de positions géographiques de sites à réapprovisionner en conteneur et des moyens (59) de comparaison de la position géographique délivrée lors d'une livraison de conteneur.

18. Installation selon l'une quelconque des revendications précédentes, **caractérisée en ce que** les informations mémorisées sur ledit support d'informations (7) comprennent un code d'identification de conteneur et **en ce que** les moyens (17) d'exploitation comprennent un système de localisation de conteneur sur un site (300) industriel et des moyens (314) de détermination des positions des conteneurs (3) sur le site (300).

19. Installation selon la revendication 18, **caractérisée en ce que** le système de localisation comprend au moins deux zones (302, 304, 306, 308) de stockage de conteneurs (3) de gaz situées sur le site (300), et comportant chacune au moins un accès (310), chaque accès (310) étant muni d'au moins un dispositif (13) de lecture associé à ladite zone (302,304,306,308), et **en ce que** les moyens (314) de détermination des positions des conteneurs (3) comprennent des moyens (316) de mémorisation des codes d'identification des conteneurs (3) associées à un code d'identification de la zone (302, 304, 306, 308) dans laquelle chaque conteneur (3) a été introduit.

20. Installation selon la revendication 19, **caractérisée en ce que** les moyens (314) de détermination des positions des conteneurs comprennent en outre des moyens (317) de mémorisation des déplacements successifs des conteneurs entre les différentes zones (302,304,306,308) de stockage ou d'utilisation.

21. Installation selon la revendication 19 ou 20, **caractérisée en ce que** chaque accès (310) comprend en outre des moyens (324) d'identification d'un utilisateur reliés aux moyens (314) de détermination des positions des conteneurs, et **en ce que** les moyens (314) de détermination des positions des conteneurs comprennent en outre des moyens (317) de mémorisation des déplacements successifs de conteneurs associés à l'identité de l'utilisateur ayant effectué ces déplacements.

22. Installation selon l'une des revendications précédentes, **caractérisée en ce que** le support d'informations (7) comprend une étiquette (9) à code à barres, et **en ce que** le dispositif (13) de lecture comprend un lecteur (15) de code à barres.

23. Installation selon l'une des revendications 1 à 21, **caractérisée en ce que** le support d'informations (7) comprend une étiquette électronique (29) comportant des moyens (39) de mémorisation et des moyens (33) démission desdites informations, et **en ce que** le dispositif (13) de lecture comprend des moyens (31) de communication avec l'étiquette électronique (29), notamment par voie hertzienne, adaptés pour recevoir lesdites informations émises par les moyens d'émission (33).

24. Installation selon la revendication 23, **caractérisée en ce que** l'unité fonctionnelle (5) comprend des moyens (51) de relevé d'informations relatives à ladite tache, et **en ce qu'**elle comprend en outre au moins un dispositif (53) d'écriture d'informations sur l'étiquette électronique (29), notamment un dispositif d'écriture à distance, comprenant des moyens de communication (31) avec l'étiquette électronique (29), notamment par voie hertzienne, et **en ce que** l'étiquette électronique (29) comprend en outre, des moyens (35) de réception desdites informations relevées pour les mémoriser dans ses moyens (39) de mémorisation.

## Claims

1. Installation for monitoring containers (3; 107; 109; 111) each equipped with an information medium (7), comprising at least one delimited storage zone (103; 300; 302, 304, 306, 308) for the containers including at least one access passage (118; 310) for a user to the storage zone, provided with at least one user identification device (142) and at least one reading device (13; 55) able to read the information on the containers' information medium (7), and data exploitation means exploiting at least the information registered by the reading device (13).

2. Installation according to Claim 1, **characterized in that** the exploitation means comprise means (148) for evaluating the stock of containers warehoused in the storage zone.

3. Installation according to Claim 1 or 2, **characterized in that** the exploitation means comprise means for determining the positions of the containers in the storage zone (103; 300).

4. Installation according to one of Claims 1 to 3, **characterized in that** the storage zone (103;...300) comprises at least one facility (100) for distributing containers (107, 109, 111) comprising a storage space (103) for the containers and means of authorization (140) of removal of at least one container disposed in the said storage space (103), the said means of authorization (140) comprising, on the one hand, disabling means (144), switchable between a position for disabling the containers disposed in the storage space (103) and a distribution position in which at least one container is authorized to be removed, and, on the other hand, means (146) of control of the said disabling means (144).

5. Installation according to either of Claims 2 and 3, **characterized in that** the information exploitation means furthermore comprise means (162) for memorizing at least one minimum threshold of full containers, means (170) for comparing the stock with the minimum threshold of full containers, means for triggering a replenishment order, controlled by the means (170) for comparing the stock with the minimum threshold, and means (127) for transmitting the replenishment order to a replenishment center (129).

6. Installation according to Claim 5, **characterized in that** the means (162) for memorizing at least one minimum threshold comprise at least one memory location (164A, 166A) per type of container for memorizing at least one minimum threshold per type of cylinder.

7. Installation according to Claim 6, **characterized in that** the memory locations (164A, 164B; 166A, 166B) per type of container comprise, on the one hand, a memory location (164A; 166A) for a safety threshold serving for the triggering of a normal replenishment order, and, on the other hand, a memory location (164B; 166B) for an emergency threshold serving for the triggering of an emergency replenishment order.

8. Installation according to any one of Claims 4 to 7, **characterized in that** the means (148) for evaluating the stock comprise means (150) for memorizing the status of the stock, which are linked to the transmission means (127) for transmitting a status of the stock to the replenishment center (129), this status comprising in particular the number and the type of full containers (107, 109) of the stock.

9. Installation according to any one of Claims 4 to 8, **characterized in that** the stock evaluation means (148) comprise means (154) for registering a removal or a placement of a container so as to detect whether a user is removing or returning a container.

10. Installation according to any one of Claims 1 to 9, **characterized in that** each reading device comprises two read heads (130, 131) disposed one behind the other in the direction (132) of passage of the containers (107, 109, 111) through this access (118), and **in that** the means (154) for registering a removal or a placement of a container comprise, linked to the or to each reading device (13), means (156) for deducing the direction of movement of the containers in the accesses (118) so as to detect whether a user is removing or returning a container.

11. Installation according to one of the preceding claims, **characterized in that** the storage zone (103) comprises separate locations (113) intended each to receive a container (107, 109, 111), a device (13) for reading the information on the containers' information media (29) being disposed in each location (103) and linked to the means (154) for registering a removal or a placement of a container so as to output to these latter means a signal indicating the presence of a container in the relevant location (103) so as to detect whether a user has removed or returned a container.

12. Installation according to any one of Claims 9 to 11, **characterized in that** the stock evaluation means (148) comprise calculation means (158) connected to the means (150) for memorizing the status of the stock, to the means (154) for registering a removal or a placement of a container as well as to the device or devices (13) for reading the information on the containers' information media (29), so as to evaluate the stock of empty and full containers, preferably on a removed or returned containers type basis, the number and the type being registered by the reading device or devices (13), and on the basis of the information about a removal or a placement of a container registered by the said means (154) for registering a removal or a placement of a container.

13. Installation according to any one of Claims 4 to 12, **characterized in that** the authorization means (140) comprise means (142) for identifying a user which are connected to the stock evaluation means (148), and **in that** the stock evaluation means (148) comprise means (160) for memorizing the codes for identifying removed and/or returned containers, these codes being read by the reading device (13) and associated with the identity of a user output by the identification means (142) with a view to the invoicing of the user.

14. Installation according to any one of Claims 4 to 13, **characterized in that** the distribution facility (100) comprises means of reception and remote checking of the operation of the facility (100), which are intended to receive replenishment center (129) control signals.

15. Installation according to one of the preceding claims for containers initially devoid of any information medium, **characterized in that** it furthermore comprises a bay (200) for access to the storage zone (103...300), the bay comprising a station (205) for attaching and detaching information media (7) on a container.

16. Installation according to Claim 15, **characterized in that** the station (205) for attaching and detaching information media (7) comprises an apparatus. (215) for distributing and collecting information media (7), especially electronic tags (29).

17. Installation according to one of the preceding claims, **characterized in that** the exploitation means (17) comprise means (57) for memorizing a list of geographical positions of sites to be replenished containerwise and means (59) for comparing the geographical position output during a container delivery.

18. Installation according to any one of the preceding claims, **characterized in that** the information memorized on the said information medium (7) comprises a container identification code and **in that** the exploitation means (17) comprise a system for locating a container on an industrial site (300) and means (314) for determining the positions of the containers (3) on the site (300).

19. Installation according to Claim 18, **characterized in that** the locating system comprises at least two zones (302, 304, 306, 308) for storing gas containers (3) situated on the site (300), and each comprising at least one access (310), each access (310) being furnished with at least one reading device (13) associated with the said zone (302, 304, 306, 308), and **in that** the means (314) for determining the positions of the containers (3) comprise means (316) for memorizing the identification codes of the containers (3), associated with a code for indentifying the zone (302, 304, 306, 308) into which each container (3) has been introduced.

20. Installation according to Claim 19, **characterized in that** the means (314) for determining the positions of the containers furthermore comprise means (317) for memorizing the successive movements of the containers between the various storage or use zones (302, 304, 306, 308).

21. Installation according to Claim 19 or 20, **characterized in that** each access (310) furthermore comprises means (324) for identifying a user, which are linked to the means (314) for determining the positions of the containers, and **in that** the means (314) for determining the positions of the containers furthermore comprise means (317) for memorizing the successive movements of containers associated with the identity of the user having performed these movements.

22. Installation according to one of the preceding claims, **characterized in that** the information medium (7) comprises a bar-code tag (9), and **in that** the reading device (13) comprises a bar-code reader (15).

23. Installation according to one of Claims 1 to 21, **characterized in that** the information medium (7) comprises an electronic tag (29) comprising means (39) for memorizing and means (33) of emission of the said information, and **in that** the reading device (13) comprises means (31) for communicating with the electronic tag (29), in particular over the airwaves, adapted so as to receive the said information emitted by the emission means (33).

24. Installation according to Claim 23, **characterized in that** the functional unit (5) comprises means (51) for registering information relating to the said task, and **in that** it furthermore comprises at least one device (53) for writing information to the electronic tag (29), in particular a remote writing device, comprising means (31) for communicating with the electronic tag (29), in particular over the airwaves, and **in that** the electronic tag (29) furthermore comprises means (35) for receiving the said registered information so as to memorize it in its memory means (39).

## Patentansprüche

1. Einrichtung zur Folgeüberwachung von jeweils mit einem Informationsträger (7) ausgestatteten Behältnissen (3; 107; 109; 111) mit zumindest einem abgegrenzten Lagerbereich (103; 300; 302; 304; 306; 308) für die Behältnisse mit zumindest einem Zugang (118; 310) zum Lagerbereich für einen Benutzer, der mit zumindest einer Vorrichtung (142) zur Identifizierung des Benutzers und zumindest einer Lesevorrichtung (13; 55) versehen ist, die in der Lage ist, die Informationen auf dem Informationsträger (7) der Behältnisse zu lesen, und Mitteln zur Auswertung von Daten, die zumindest Informationen auswerten, die von der Lesevorrichtung (13) abgelesen werden.

2. Einrichtung nach Anspruch 1, **dadurch gekennzeichnet, daß** die Auswertemittel Mittel (148) zur Ermittlung des Vorrats an Behältnissen umfassen, die in dem Lagerbereich eingelagert sind.

3. Einrichtung nach Anspruch 1 oder 2, **dadurch gekennzeichnet, daß** die Auswertemittel Mittel zur Bestimmung der Positionen von Behältnissen in dem Lagerbereich (103; 300) umfassen.

4. Einrichtung nach einem der Ansprüche 1 bis 3, **dadurch gekennzeichnet, daß** der Lagerbereich (103; ...300) zumindest eine Einrichtung (100) zur Ausgabe von Behältnissen (107, 109, 111) umfaßt, die einen Lagerraum (103) für die Behältnisse und Mittel zur Freigabe (140) der Entnahme zumindest eines in dem Speicherraum (103) befindlichen Behältnisses umfassen, wobei die Freigabemittel (140) einerseits Blockiermittel (144), die zwischen einer Position zur Blockierung der in dem Speicherraum (103) befindlichen Behältnisse und einer Ausgabeposition vertauschbar sind, in der zumindest für ein Behältnis die Freigabe vorliegt, entnommen zu werden, und andererseits Mittel zur Steuerung (146) der Blockiermittel (144) umfassen.

5. Einrichtung nach einem der Ansprüche 2 bis 3, **dadurch gekennzeichnet, daß** die Mittel zur Auswertung von Informationen außerdem folgendes umfassen: Speichermittel (162) für zumindest einen Minimumgrenzwert für volle Behältnisse, Mittel (170) zum Vergleichen des Vorrats mit dem Minimumgrenzwert für volle Behältnisse, Mittel zur Auslösung einer Wiederbelieferungsbestellung, die von dem Mittel (170) zum Vergleichen des Vorrats mit dem Minimumgrenzwert gesteuert werden, und Mittel zur Übertragung (127) der Wiederbelieferungsbestellung zu einer Wiederbelieferungszentrale (129).

6. Einrichtung nach Anspruch 5, **dadurch gekennzeichnet, daß** die Speichermittel (162) für zumindest einen Minimumgrenzwert zumindest einen Speicherplatz (164A; 166A) je Behältnisart umfassen, um zumindest einen Minimumgrenzwert je Flaschenart zu speichern.

7. Einrichtung nach Anspruch 6, **dadurch gekennzeichnet, daß** die Speicherplätze (164A, 164B; 166A, 166B) je Behältnisart einerseits einen Speicherplatz (164A; 166A) für einen Sicherheitsgrenzwert umfassen, der zur Auslösung einer normalen Wiederbelieferungsbestellung dient, und andererseits einen Speicherplatz (164B; 166B) für einen Dringlichkeitsgrenzwert, der zur Auslösung einer dringenden Wiederbelieferungsbestellung dient.

8. Einrichtung nach einem der Ansprüche 4 bis 7, **dadurch gekennzeichnet, daß** die Vorratermittlungsmittel (148) Mittel zur Speicherung (150) des Lagerbestands umfassen, die mit Übertragungsmitteln (127) für die Übertragung eines Lagerbestandes in die Wiederbelieferungszentrale (129) verbunden sind, wobei dieser Bestand insbesondere die Zahl und die Art der vollen Behältnisse (107, 109) des Lagers umfaßt.

9. Einrichtung nach einem der Ansprüche 4 bis 8, **dadurch gekennzeichnet, daß** die Vorratermittlungsmittel (148) Mittel (154) zum Feststellen einer Entnahme oder einer Einlieferung eines Behältnisses umfassen, um zu erfassen, ob ein Benutzer ein Behältnis entnimmt oder zurückbringt.

10. Einrichtung nach einem der Ansprüche 1 bis 9, **dadurch gekennzeichnet, daß** jede Lesevorrichtung zwei Leseköpfe (130, 131) umfaßt, die in Richtung (132) des Durchtritts der Behältnisse (107, 109, 111) in diesem Zugang (118) einer hinter dem anderen angeordnet sind, und daß die Mittel (154) zum Feststellen einer Entnahme oder einer Einlieferung eines Behältnisses mit der oder jeder Lesevorrichtung (13) verbundene Mittel (156) zur Ableitung der Bewegungsrichtung der Behältnisse in den Zugängen (118) umfassen, um zu erfassen, ob ein Benutzer ein Behältnis entnimmt oder zurückbringt.

11. Einrichtung nach einem der vorhergehenden Ansprüche, **dadurch gekennzeichnet, daß** der Lagerbereich (103) getrennte Orte (113) umfaßt, die dazu bestimmt sind, jeweils ein Behältnis (107, 109, 111) aufzunehmen, wobei eine Lesevorrichtung (13) für Informationen, die sich auf den Informationsträgern (29) der Behältnisse befinden, an jedem Ort (103) angeordnet und mit Mitteln (154) zum Feststellen einer Entnahme oder einer Einlieferung eines Behältnisses verbunden ist, um an diese letzteren Mittel ein Signal für das Vorhandensein eines Behältnisses an dem betreffenden Ort (103) zu liefern, um zu erfassen, ob ein Nutzer ein Behältnis entnommen oder zurückgebracht hat.

12. Einrichtung nach einem der Ansprüche 9 bis 11, **dadurch gekennzeichnet, daß** die Vorratermittlungsmittel (148) Berechnungsmittel (158) umfassen, die mit den Mitteln zur Speicherung (150) des Lagerbestandes, mit den Mitteln (154) zum Feststellen einer Entnahme oder einer Einlieferung eines Behältnisses sowie mit den Lesevorrichtungen (13) für Informationen, die sich auf den Informationsträgern (29) der Behältnisse befinden, verbunden sind, um den Vorrat an leeren und vollen Behältnissen zu ermitteln, vorzugsweise nach der Art entnommener oder zurückgebrachter Behältnisse, wobei die Anzahl und die Art von der oder den Lesevorrichtungen (13) festgestellt werden, und auf der Grundlage der Information über die Entnahme oder Einlieferung eines Behältnisses, die von den Mitteln (154) zum Feststellen einer Entnahme oder einer Einlieferung eines Behältnisses festgestellt wird.

13. Vorrichtung nach einem der Ansprüche 4 bis 12, **dadurch gekennzeichnet, daß** die Freigabemittel (140) Mittel zur Identifizierung (142) eines Benutzers umfassen, die mit den Vorratsermittlungsmitteln (148) verbunden sind, und daß die Vorratsermittlungsmittel (148) Mittel (160) zur Speicherung der Identifizierungskodes der entnommenen und/oder zurückgebrachten Behältnisse umfassen, wobei diese Kodes durch die Lesevorrichtung (13) gelesen und mit der Identität eines Benutzers verknüpft werden, die von den Identifizierungsmitteln (142) im Hinblick auf die Rechnungsstellung an den Benutzer ausgegeben wird.

14. Einrichtung nach einem der Ansprüche 4 bis 13, **dadurch gekennzeichnet, daß** die Ausgabeeinrichtung (100) Mittel zum Empfang und zur Fernsteuerung der Funktion der Einrichtung (100) umfaßt, die dazu bestimmt sind, Steuersignale von der Wiederbelieferungszentrale (129) zu empfangen.

15. Einrichtung nach einem der vorhergehenden Ansprüche für anfänglich informationsträgerlose Behältnisse, **dadurch gekennzeichnet, daß** sie außerdem eine Zugangsschleuse (200) zum Lagerbereich (103...300) umfaßt, wobei die Schleuse eine Station (205) zur Montage und Demontage von Informationsträgern (7) auf und von einem Behältnis umfaßt.

16. Einrichtung nach Anspruch 15, **dadurch gekennzeichnet, daß** die Station (205) zur Montage und Demontage von Informationsträgern (7) eine Vorrichtung (215) zur Ausgabe und Rücknahme von Informationsträgern (7), insbesondere von elektronischen Etiketten (29), umfaßt.

17. Einrichtung nach einem der vorhergehenden Ansprüche, **dadurch gekennzeichnet, daß** die Auswertungsmittel (17) Mittel (57) zur Speicherung einer Liste geographischer Positionen von mit Behältnissen wiederzubeliefernden Orten und Mittel (59) zum Vergleich der bei einer Behältnislieferung ausgegebenen geographischen Position umfassen.

18. Einrichtung nach einem der vorhergehenden Ansprüche, **dadurch gekennzeichnet, daß** die auf den Informationsträgern (7) gespeicherten Informationen einen Behältnisidentifizierungskode umfassen und daß die Auswertungsmittel (17) ein System zur Behältnislokalisierung an einem Industriestandort (300) und Mittel (314) zur Bestimmung der Position von Behältnissen (3) am Standort (300) umfassen.

19. Einrichtung nach Anspruch 18, **dadurch gekennzeichnet, daß** das System zur Lokalisierung zumindest zwei Lagerbereiche (302, 304, 306, 308) für Gasbehältnisse (3) umfaßt, die am Standort (300) gelegen sind und jeweils zumindest einen Zugang (310) aufweisen, wobei jeder Zugang (310) mit einer Lesevorrichtung (13) versehen ist, die mit dem Bereich (302, 304, 306, 308) verknüpft ist, und daß die Mittel (314) zur Bestimmung der Position von Behältnissen (3) Mittel (316) zur Speicherung der Identifikationskodes von Behältnissen (3) umfassen, die mit einem Identifikationskode des Bereichs (302, 304, 306, 308) verknüpft sind, in den jedes Behältnis (3) eingeführt wurde.

20. Einrichtung nach Anspruch 19, **dadurch gekennzeichnet, daß** die Mittel (314) zur Bestimmung der Position von Behältnissen außerdem Mittel (317) zur Speicherung aufeinanderfolgender Verlagerungen von Behältnissen zwischen den verschiedenen Lager- oder Verwendungsbereichen (302, 304, 306, 308) umfassen.

21. Einrichtung nach Anspruch 19 oder 20, **dadurch gekennzeichnet, daß** jeder Zugang (310) außerdem Mittel (324) zur Identifizierung eines Benutzers umfaßt, die mit den Mitteln (314) zur Bestimmung der Positionen von Behältnissen verbunden sind, und daß die Mittel (314) zur Bestimmung der Position von Behältnissen außerdem Mittel (317) zur Speicherung aufeinanderfolgender Verlagerungen von Behältnissen umfassen, die mit der Identität des Benutzers verknüpft sind, der diese Verlagerungen ausgeführt hat.

22. Einrichtung nach einem der vorhergehenden Ansprüche, **dadurch gekennzeichnet, daß** der Informationsträger (7) ein Strichkodeetikett (9) umfaßt und daß die Lesevorrichtung (13) einen Strichkodeleser (15) umfaßt.

23. Einrichtung nach einem der Ansprüche 1 bis 21, **dadurch gekennzeichnet, daß** der Informationsträger (7) ein elektronisches Etikett (29) umfaßt, das Speichermittel (39) und Mittel (33) zur Sendung der Informationen umfaßt, und daß die Lesevorrichtung (13) Mittel (31) zur Kommunikation mit dem elektronischen Etikett (29), insbesondere per Funk, umfaßt, die dafür ausgelegt sind, die von den Sendemitteln (33) ausgesendeten Informationen zu empfangen.

24. Einrichtung nach Anspruch 23, **dadurch gekennzeichnet, daß** die Funktionseinheit (5) Mittel (51) zur Aufnahme von Informationen umfaßt, die die Aufgabe betreffen, und daß sie außerdem zumindest eine Vorrichtung (53) zum Schreiben von Informationen auf das elektronische Etikett (29) umfaßt, insbesondere eine auf Distanz arbeitende Schreibvorrichtung, die Mittel (31) zur Kommunikation mit dem elektronischen Etikett (29), insbesondere per Funk, umfaßt, und daß das elektronische Etikett (29) außerdem Mittel (35) zum Empfang der aufgenommenen Informationen umfaßt, um sie in seinen Speichermitteln (39) zu speichern.
